# EUROPEAN PATENT SPECIFICATION

(11) **EP 2 487 860 B1**
(45) Date of publication and mention of the grant of the patent: **25.09.2013**
(21) Application number: 11382033.6
(22) Date of filing: 10.02.2011
(51) Int. Cl.: H04L 29/06, G06F 21/00

(54) **Method and system for improving security threats detection in communication networks**
Verfahren und System zur Verbesserung der Sicherheitsgefahrenerkennung in Kommunikationsnetzwerken
Procédé et système pour améliorer la détection de menaces de sécurité dans des réseaux de communication

(43) Date of publication of application: 15.08.2012
(73) Proprietor: Telefónica, S.A., 28013 Madrid (ES)
(72) Inventor: Sanz Hernando, Ivan, 28013 Madrid (ES); Amaya Calvo, Antonio Manuel, 28013 Madrid (ES)
(74) Representative: Carpintero Lopez, Francisco

(56) References cited:
- US-A1- 2003 051 026
- US-A1- 2007 300 286
- US-A1- 2009 064 334

## Description

### TECHNICAL FIELD

The present invention relates generally to network security and more particularly to a method and system for enhancing security in communications networks and systems.

### DESCRIPTION OF THE PRIOR ART

As the systems and systems grow more complex, so grew the problem of monitoring their health status. This is accurate for all the health indicators of a system (performance, resource consumption) but it's especially true of their security status. Thus, security monitoring has moved, in a few years, from environments with a reduced security devices set, generating a few hundreds of daily events, to environments with a huge device number that generate several hundreds of thousands of daily events.

Where security managers were previously performing a manual analysis of all security events, now it is impossible to perform such a manual analysis, due to the sheer volume of daily events.

To solve this problem, Security Information and Event Management (SIEM) (information about these systems can be found at http://www.rsa.com/node.aspx?id=3182) systems were born to facilitate that analysis and automate where it is possible tasks that, routinely, are executed on the analysis of any security log on every environment. SIEM systems are designed to centralize all the security information generated by the devices deployed on any company, at the same time normalizing the collected information in a common format that will allow performing an integrated analysis of security events, independently of the originating devices.

The term Security Information Event Management (SIEM) describes the product capabilities of gathering, analyzing and presenting information from network and security devices; identity and access management applications; vulnerability management and policy compliance tools; operating system, database and application logs; and external threat data. Some Commercial SIEM products include AcceIOps, AraKnos, ArcSight, BLUESOC, Cisco Security MARS, lmmunesecurity, LogLogic, LogICA, NitroSecurity, RSA enVision, SenSage, and others.

Usually SIEM Capabilities include at least:
- Data Aggregation: SIEM/LM (log management) solutions aggregate data from many sources, including network, security, servers, databases, applications, providing the ability to consolidate monitored data to help avoid missing crucial events. The collected information is standardized (adapted/translated) to a requested common format.
- SIEM solutions filter the information not related to system security.
- Correlation: looks for common attributes, and links events together into meaningful bundles to detect known threats. This technology provides the ability to perform a variety of correlation techniques to integrate different sources, in order to turn data into useful information.
- Alerting: the automated analysis of correlated events and production of alerts, to notify recipients of immediate issues.
- Dashboards: SIEM/LM tools take event data and turn it into informational charts to assist in seeing patterns, or identifying activity that is not forming a standard pattern.
- Compliance: SIEM applications can be employed to automate the gathering of compliance data, producing reports that adapt to existing security, governance and auditing processes.
- SIEM solutions present the information using different formats for different types of reports or applications.
- Retention: SIEM/SIM solutions employ long-term storage of historical data to facilitate correlation of data over time, and to provide the retention necessary for compliance requirements.

Although SIEM systems bridged the gap between the increases of generated security events and the need of having a meaningful analysis of those same events, they brought also some new problems to the table. The main one is that SIEM systems' correlation modules (modules that relate or inter-relate individual events to detect more complex attacks) are based on detecting known threats, which must be characterized and configured beforehand by an expert. SIEM's correlation modules are based on fixed, procedural rules: 'if event A has occurred and event B occurs on the next X seconds, and then event C occurs then raise an alarm'. That is, only specific events related to specific machines, systems or applications are detected. This detection method forces therefore a continuous revision of the configured correlations, to detect new threats that weren't included or configured initially. Any actualization of the probes/machines used as an information source (e.g. Routers, Antivirus, Firewalls, Web Servers, Intrusion Detection Systems, Intrusion Prevention Systems...) require revising the configured correlations since it might be necessary to modify some of the existing correlations to include the newly defined events, or it might be necessary to define new correlations to monitor the events previously unknown to the system. If a new device, from a previously unknown maker, is deployed then all the correlations will have to be modified to include the events generated by the new device. Otherwise, the threats that affect, use or start on the new system will not be detected.

Besides those configuration tasks, which must be executed on a continuous way, there are other problems that cannot be solved easily or at all with the correlation solutions implemented on currently available commercial SIEM systems:
- The correlation module is highly dependent of the Intrusion Detection Systems (IDS) generated events. This dependency means that a high number of false positives is generated usually, which in turn leads to a wasted effort in analyzing and solving them by security managers tasked with that analysis.
- Since correlations must be defined specifically for each threat, current correlations modules cannot detect new kinds of threats, or even current threats that use a new, previously unknown, sequence of events.

For example, if we want to detect a successful brute force attack against our FTP server, we must define a correlation rule like:
- If we find more than seven ftp authentication failed events and later a successful authentication login, we must generate an alarm notifying this issue.

If we want to detect the same brute force attack against a SSH server, we have to generate another correlation rule like:
- If we find more than seven ssh authentication failed events, we generate a brute force alarm.

SIEM systems' correlation modules need to define exactly what events must be analyzed to detect this kind of attack. If we add new devices than send new events, we have to review the actual brute force correlation rules to include these new events.
- Even after the threat is identified and characterized, the system must be manually configured to detect it, and that requires an additional effort by the security managers.

US 2009/064334 is further prior art related to security threat detection.

In other words, the overall problem is the use of not flexible correlation modules in current systems (the current correlation modules have high dependency on specific events, in order to detect new attack technique new correlations must be defined, small changes in a current attack technique make the attack not detectable...).

New correlation tools are therefore required to deal with those challenges. Those new tools should allow decreasing the manual effort that, continuously, security managers must invest on current systems. They should also reduce false positives generated by the systems, which have a direct impact on the time and effort required to manage current systems, and at the same time reduce the actual time available to process real alarms.

### SUMMARY OF THE INVENTION

The present invention use a new method and system based on artificial intelligence, that will reduce or eliminate the deficiencies present on current SIEM systems.

The proposal is based on two high level axes:
- Defining a dynamic grouping of security events that will allow the system to be independent of specific events generated by any specific device.
- Using artificial intelligence algorithms to reduce or even eliminate the deficiencies present on current correlation systems. Concretely, the new system will use neural networks due to the intrinsic characteristics of such networks,
which minimize several of the deficiencies of current correlation systems.

From now on, the term ACS (Advanced Correlation System) will be used to refer to the newly developed invention.

In a first aspect, it is presented a method of improving the detection of security threats in a communication network, the communication network including security devices which generate security events, those events being stored in a security database, the system comprising:
a) Defining different types of security events, each type of security event is called a dynamic tag, the dynamic tag assigned to each security event will depend on certain conditions met by the description of the event.
b) Defining the data models, a data model being the collection of dynamic tags which are related to a certain security threat; a data model will be defined for each type of security threat to be detected
c) On each configured execution interval, selecting the devices to be analyzed for each data model and, for each analyzed device, reading from the security database the events generated by said device, assigning a dynamic tag to each security event and calculating the value of each dynamic tag, the value of the tag is the number of occurrences for each analyzed device of the type of events correspondent to said tag
d) Clustering the tags, according to the data model definition, generating a pattern with the tag values for each data model and for each analyzed device
e) For each data model, reading the correspondent patterns generated in the step d and applying a Artificial Intelligence algorithm based on the information stored in a knowledge database of said data model, in order to decide whether a suspicious activity alarm must be generated for each analyzed pattern or not; each knowledge database including, for each data model, a set of known patterns with the information whether an alarm must be generated for said pattern or not

In another aspect, it is presented a system comprising means adapted to perform the method.

Finally, a computer program comprising computer program code means adapted to perform the above-described method is presented.

For a more complete understanding of the invention, its objects and advantages, reference may be had to the following specification and to the accompanying drawings.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but rather as an example of how the invention can be embodied. The drawings comprise the following figures:
Figure 1 represents a block diagram of the data abstraction module in an exemplary embodiment of the present invention.
Figure 2 represents a block diagram of the data abstraction module and the AI engine module in an exemplary embodiment of the present invention.
Figure 3 shows a block diagram of the ACS arquitecture integrated in a SIEM system in an exemplary embodiment of the present invention.
Figure 4 is a graphic showing the number of total alarms generated by ACS and an standard SIEM system.

Corresponding numerals and symbols in the different figures refer to corresponding parts unless otherwise indicated.

### DETAILED DESCRIPTION OF THE INVENTION

The present invention proposes a method and system which analyze automatically security information to detect anomalies and threats, in a way which solves the prior art problems. In the present invention, the detection is independent of specific events generated by specific devices (web servers, routers...) and allows decreasing the manual effort and the number of false positives

Current security systems use references to specific events or group of events to detect actions that will reflect a suspicious activity that should be monitored, so when new events or new machines are introduced, the security system must be modified.

In order to avoid a dependency of the system on specific events, and to allow efficient integration of new data sources, a tagging system based on dynamically grouping events according to the event description has been designed. The different events are classified in a category (i.e. they are labeled with a specific tag) depending on the type of event. These categories or tags are called "dynamic tags". Identification and definition of every tag or category is a task that must be executed by an expert, taking into account the desired model. Although that work must be realized taking into account the previous expertise of the expert on the field, he can use data mining and/or statistical tools to help him on the definition and identification process, especially during the first phases of the process.

In order to assign this tags, the events produced by the different information sources (devices usually identified with an IP address) are analyzed, and if the event fulfills certain conditions, it is labeled with a certain tag. Usually this process is done by analyzing the event description, and if certain keywords are found in the description, the event is assigned to a specific category/tag.

Hence, the present invention allows classifying unknown events generated by new devices without any modification in the system (if the new event description include certain keyword(s), it would be classified automatically without modifying the system), so the correlation engine proposed in the present invention is independent of specific events generated by any specific device.

In a preferred embodiment, the events are classified (assigned) with a certain dynamic tag depending on keywords used in their description. So, each dynamic tag will have certain keywords associated and if said keywords are found in the description of the event, the event will be assigned to the correspondent tag.

As an example we will describe the process used to define a dynamic tag to identify all events relative to a web server configuration. To that extent, the logs of the monitoring devices will be analyzed searching for common features for events related to web servers. For example, as a result of the analysis we might identify as related to web traffic all the events that include any of the following words: 'web' 'http' 'php' 'iis' 'script'. Now the logs for the common features of the configuration traces are analyzed. And so, we could add another word set that refer to some configuration aspect: 'conf' 'disclos' 'reveal' Thus, all the logs/events that have a word from the first set and a word from the second one will be detected and assigned to the "web configuration" category or, in other words, they are labeled with the "web configuration" dynamic tag.

Once the events are analyzed and classified, the amount of events classified in each group or tag is calculated and store in a database. The tag value is defined as the amount of events for each analyzed device classified in that specific group or tag. The system allows the definition of as many tags as needed. Besides the keywords for each tag it is necessary to define, at least, the following additional information to define completely each tag:
- Database and table that where the actual value of each tag is store.
- Data type of the value of the tag (Usually is a number, but it could be also a YES/NO value).
- Additional conditions that might be necessary to include on the tag definition, as for example:
   o Exceptions.
   o Time window that will be consulted to generate a a value for the tag.

Each time the correlation module wants to update the value of each dynamic tag, a dynamic query base of their definition will be generated to get the correct number of occurrences of this type of events (the tag value).

Some examples of defined tags in one exemplary embodiment of the invention are: web_access, web_atttempts, web_overflow, web_scan, web_eror, web_auth, web_highseverty, web_attack, web_password...

The security attacks or threats are usually characterized by the occurrence of several types of events within a period of time, i.e. usually in order to detect a security threat, several types of events must be detected. As each type of event is identified by a tag, it is useful to cluster the tags in groups which characterized a certain attack or threat. This collection of related tags is known in this context as data model.

For example, there could be a data model about an SQL database suspicious activity. This data model will contain the following tags:
sql=Any SQL event
sql_access=events which imply access to the SQL database
sql_command= events which imply commands on the SQL database
sql_scan= events which imply an scan of the SQL database

The minimum information that is needed to define a data model is as follows:
- Data model name
- List of the tags included in the data model.
- File where the real time data read will be stored
- Identification of which group of IP addresses will be monitored by the data model. Each security attack (represented by the data model) affect to certain devices, so it is a waste of time and resources to monitor all the devices for every data model. Hence, for each data model, only certain devices (defined by their IP adresses) are monitored.

On the tag definition phase, the tags which would be taken into account by an expert realizing a manual analysis of the security of a given system will be identified as relevant to detect a specific malicious activity. These tags will be clustered in the data model which defines said specific malicious activity.

In each configured execution interval, the values of the tags are obtained for each analyzed device and clustered according to the model definition. The value of each model, that is the specific tag values obtained in each execution interval grouped in each data model, is called a pattern.

For the above example, a pattern 5, 0, 0, 5 will mean 5 SQL events which are 5 SQL scans with no access and no commands. A pattern like that, will be suspicious so an alarm should be generated.

Once the tags and the data models are defined, the second part of the present invention, the use of Artificial Intelligence, Al, algorithms, particularly neural networks Al algorithm is going to be explained.

Using AI algorithms allows dealing with security events as a real security expert would do, removing the known traffic and focusing on the unknown suspicious traffic but in an automatic way, without involving the participation of a real security expert.

The system will include several AI algorithms, based on the needs detected on the different environments where ACS is used. Every AI algorithm will incorporate all the learnt knowledge from every environment. Thus, knowledge from a previously studied environment will be directly useable on following deployments. AI algorithms are defined using dynamic tags -clustered in data models- as input nodes, not using specific events.

The same process will have to be followed to define all the different models that would be later implemented on AI algorithms. We will show, as an example, the definition of one of the networks of ACS, used for the identification and detection of Web attacks.
1. First we would identify and define the dynamic tags, clustered in data models, that will be used to create the AI model, that is, which events will be processed by a given neural network
2. Once the dynamic tags that will form the AI model have been identified, a first programming of the neural network will be realized, based on the theoretical behavior that the network should have. To that extent, we will feed the network an initial set of patterns that should generate alarms, and an initial set of patterns that should not generate alarms. These patterns consist in the combination of tag values within each data model, which will generate a security alarm (yes) and the combination of values of tags within each data model, which will not generate a security alarm (no).
   As an example, we include some patterns include in the WEBNeuro model described before.
   187,90,80,0,0,4,0,33,4,15,0,17,0,0,0,0,0,0,0,0,yes
   221,98,104,0,0,5,0,48,5,15,1,25,0,0,0,0,0,0,0,0,yes
   2353,0,0,0,0,0,0,0,0,0,0,0,0,0,0,1,0,0,0,0,no
   3106,0,0,0,0,0,0,0,0,0,0,0,0,0,0,2,0,0,0,0,no
   Each value of the pattern, separated by coma, is related with the current dynamic tag of the model, described in the xml definition of the model. So, if we see the following pattern,
   3106,0,0,0,0,0,0,0,0,0,0,0,0,0,0,2,0,0,0,0,no
   We can deduce that a certain device with a certain IP generates 3106 events detected by the web tag (first tag), and 2 events detected by the 'web_error' tag (16^{th} tag).
   Once the tags and initial behavior have been defined, AI model programming can start. The goal is to find a parameter configuration for the AI model that will allow the resulting network to fulfill at 100%
   the knowledge included on the predefined patterns.
3. Adding new patterns on the knowledge base, normally during a real environment test phase, and based on the analysis of real alarms, will allow for fast knowledge learning. During the learning and tuning phase, false positives should decrease rapidly as new patterns based on the real behavior of the system are added to the neural network knowledge base. Internally, when the system operator or the system expert adds a new pattern to the knowledge base, the pattern isn't incorporated immediately. Instead, the new patterns will be added to a temporal knowledge base. Periodically, patterns included on the permanent and temporal knowledge bases will be analyzed, and the network parameters will be adjusted to try to get a 100% of success. If any of the new patterns is incoherent with the existing, permanent, knowledge base, then the newly reconfigured network won't be able to adapt to the 100% of the patterns. If this situation arises, then the temporal knowledge base won't be consolidated on the permanent knowledge base, and an expert will have to analyze the new patterns to identify and discard the incoherent ones.

The advanced correlation engine proposed in the present invention comprises two different parts of modules.

### Data abstraction module and

### Artificial Engine Module

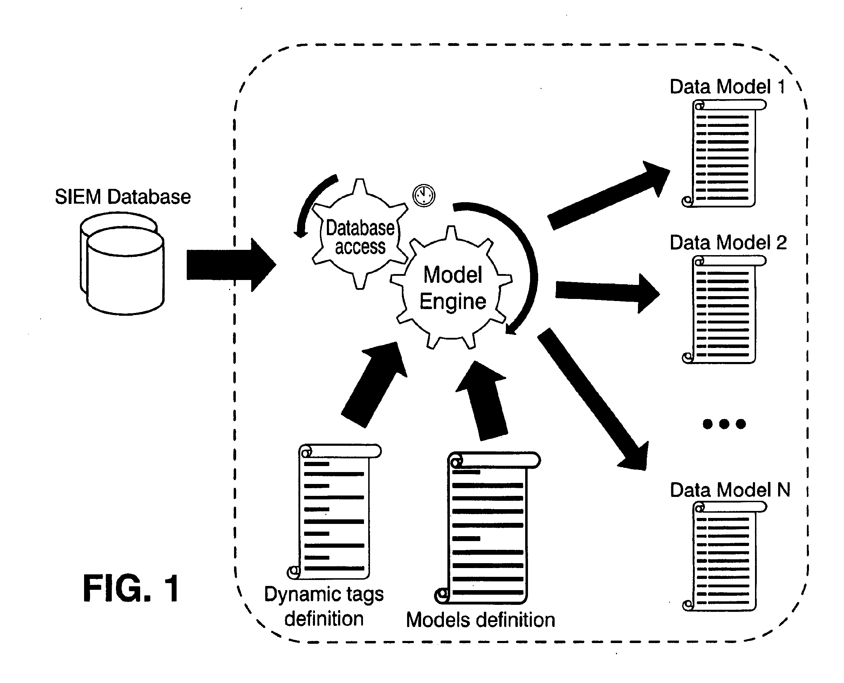

Some details from the data abstraction module are shown in figure 1. As it can be seen, the input of this module is the database of a SIEM system. In this database, the security SIEM system stores all security events (generated by the communication network devices as firewalls, routers, web servers...) that will be analyzed by ACS. That is, in the present implementation, the security events to be analyzed have been collected and input in a database by an external system, in this implementation a SIEM system (this is a well known technique and it is not the object of the present invention).

The advanced correlation engine proposed in the present invention is independent from the SIEM solution deployed. The only requisite is that the engine must have access to the database (1) where the SIEM centrally stores all events.

This module comprises the following sub-modules:
- ***Database access**.* Module that will manage the access of the model engine to the SIEM Database. It will translate the events in the format used by the SIEM database to the format used by the ACS system. This module will make stronger the independency between Model Engine and SIEM Database
- ***Dynamic tags definition**.* File set that includes the information about each dynamic tag. This configuration file and the models definition file, feeds the Model Engine, which will generate patterns during its runtime.
- ***Data Models definition**.* File set that includes the information about the dynamic tags which form each model, and also about the devices which must be analyzed for each data model. For each data model, only certain devices (defined by their IP address) are monitored, so for each data model an IP filter definition is applied to select the devices whose events must be analyzed.
- ***Model Engine**.* Module that will generate patterns for each data model based on the SIEM stored events. It will generate a data file for each data model, that will include the patterns generated for each analyzed device (each device identified by its IP address).
   On each configured execution interval, the model engine analyzes the events stored in the SIEM database and calculates the value of each defined tag (the number of occurrences for each analyzed device, of the type of events correspondent to said tag according to the tag definition). The model engine clusters the tags, according to the data model definition, generating real patterns (one pattern per data model and per device). The patterns will be divided in N subgroups (6) (data model 1 to data model N). The subgroup data model m, will include the Kₘ patterns generated for the model m, being Kₘ the number of devices to be analyzed for data model m. All these patterns will be the input of the AI Engine module.

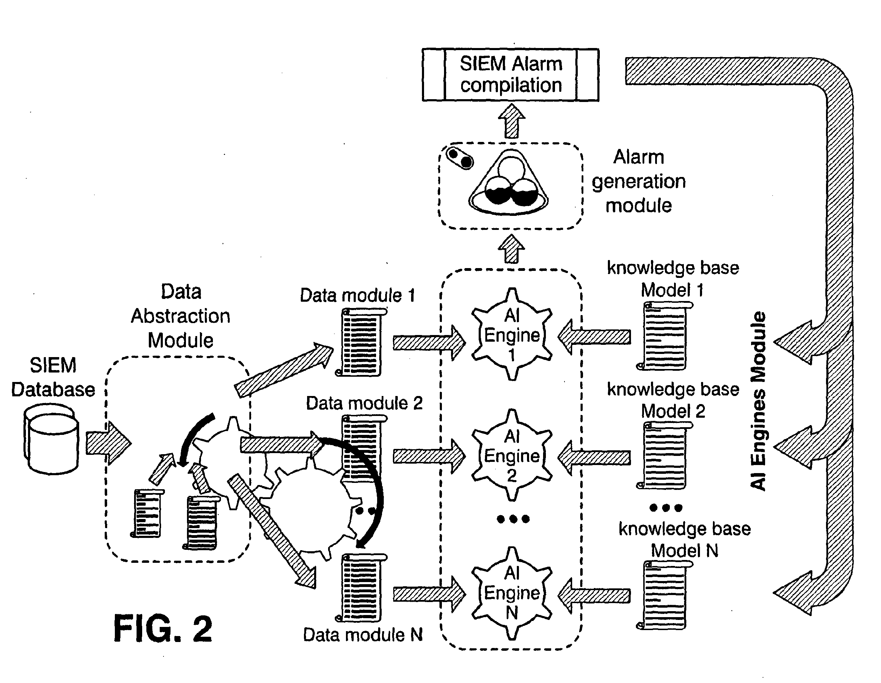

The arquitecture of the Artificial Engine Module is shown on figure 2. This module comprises the following sub-modules (as shown in figure 2):
- ***AI knowledge databases**.* There is at least one AI knowledge database for each data model, each database will include a file that will describe the dynamic tags included by the model, and all the patterns that form the initial knowledge used to program the neural network (initial set of patterns). For each pattern, it will be pointed out whether a security alarm must be generated or not. (e.g. "if pattern for data model m=221,98,104,0,0,5,0,48,5,15,1,25,0,0,0,0,0,0,0,0, then alarm generated). These knowledge bases are feed with new patterns (with the corresponding information about whether an alarm must be generated or not) during all the working period.
- ***AI Engines**.* This module will implement all the AI algorithms that will process the patterns generated by the data abstraction module. There will be N Al Engines (one per data model) and each one will process the patterns of the correspondent data model. Patterns will be included in a data file, and will be evaluated by the correspondent Al Engine. Al Engines use standard neural or bayesians networks for the alarm detection algorithm implementation based on the knowledge base from each AI Engine. It uses clustering techniques for the identification of unusual patterns and it may include other proprietary algorithms if it's necessary. For the new patterns (not included in the knowledge database), the Al algorithm will estimate a result based on the weighted similarity between the new patterns and the known patterns included in the knowledge database. When an analyzed pattern is too different from the known patterns, the engine can warn the administrator that the different pattern can probably generate a false positive or negative. The AI engines will process the patterns and as a result, they will be decided if an alarm should be generated or not for each processed pattern. This information will be transmitted to an Alarm Generation Module and then to the Alarm compilation module of the security system (usually a SIEM system) on which the modules are integrated. If a false alarm is generated by the engine, the correspondent pattern is stored in the knowledge database, so no more false alarms will be generated for these patterns.

Once the theoretical behavior has been defined, it will be implemented and tested on a real environment where the initial configuration will be checked. During a first period (learning period) there will be a tuning of the initial parameters of the Al Engines and of the data in the knowledge databases, in order to get a final model. This phase will enrich the knowledge base until a complete, working model, is defined. Even after this learning period, when the working model is defined, it's possible that some new patterns appear that should be included on the knowledge base, although the number of new patterns will be small and will decline quickly once all specific knowledge has been incorporated to the knowledge base (because of the fast learning of the Al algorithms).

Summarizing, the ACS workflow can be described as follows:
0) The tags and models are defined. The Al engines (neural networks) are configured including in the knowledge databases an initial set of know patterns. Then it's time to start analyzing real event to detect suspicious activity.
1) Each certain configured time interval, ACS Data Abstraction Module finds out which devices (lPs) must be analyzed (usually identified by an IP Filter Definition) for each possible security attack (data model), that is, the devices whose generated events must be analyzed for each data model.
2) ACS Data Abstraction Module generate a query based on tag definition, building a pattern for each selected IP (usually a SQL query).
3) All patterns are evaluated by the Neural Network implemented in the ACS AI Engine Module for the analyzed data model. If an analyzed pattern is considered suspicious by the neural network, ACS will send an alarm to notify this suspicious activity.

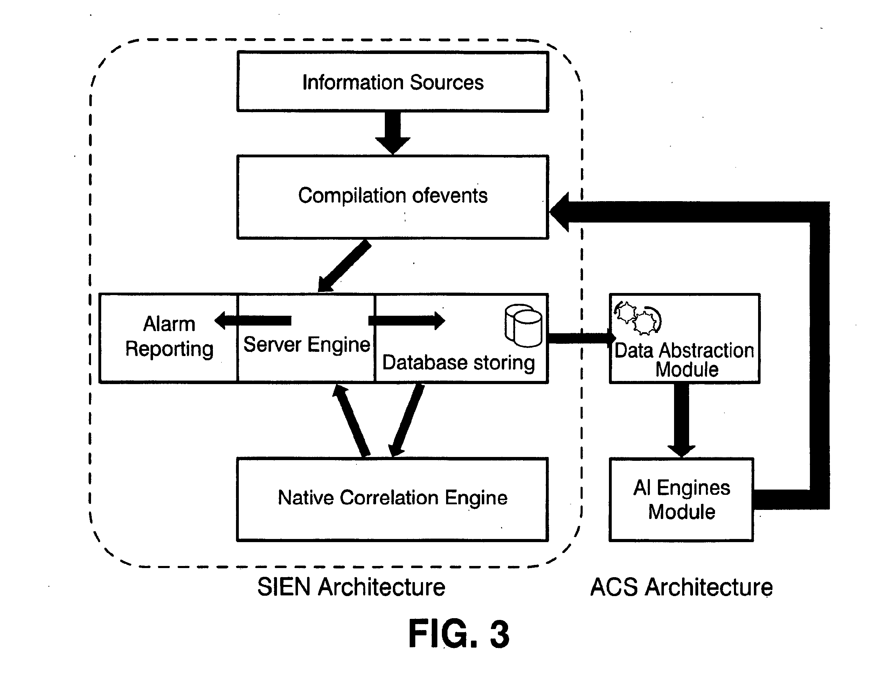

In an embodiment of the present invention, the ACS has been integrated in a standard SIEM architecture (SIEM of the free distribution suite OSSIM Open Source Security Information Management). The artificial intelligence algorithms used in this embodiment are neural networks and event clustering techniques. Figure 3 shows the Arquitecture of the embodiment.

The standard SIEM makes a compilation of all events sent by the information sources (2). All these events are processed by a server engine and stored in a centralized database used by the native correlation engine to analyze all this information in order to generate alarms when some suspicious activity is discover.

ACS has been configured as a complement to the native correlator, although it allows two possible configuration methods:
- Notification of any suspicious activity detected by any of the AI based algorithms.
- Alarm generation only when the native correlation engine hasn't detected it.

As said in the previous paragraph, the ACS module takes at input data the events stored in the centralized SIEM database. The events are read and processed in the Data Abstraction Module which generates the patterns for each of the models so they can be analyzes by the AI, Artificial Intelligence, Engines Module. The suspicious activity detected may be treated by the SIEM algorithm as events to be compiled and analyzed in order to decide if an alarm must be raised (usually if the event is a suspicious activity detected by the ACS module, an alarm will be raised).

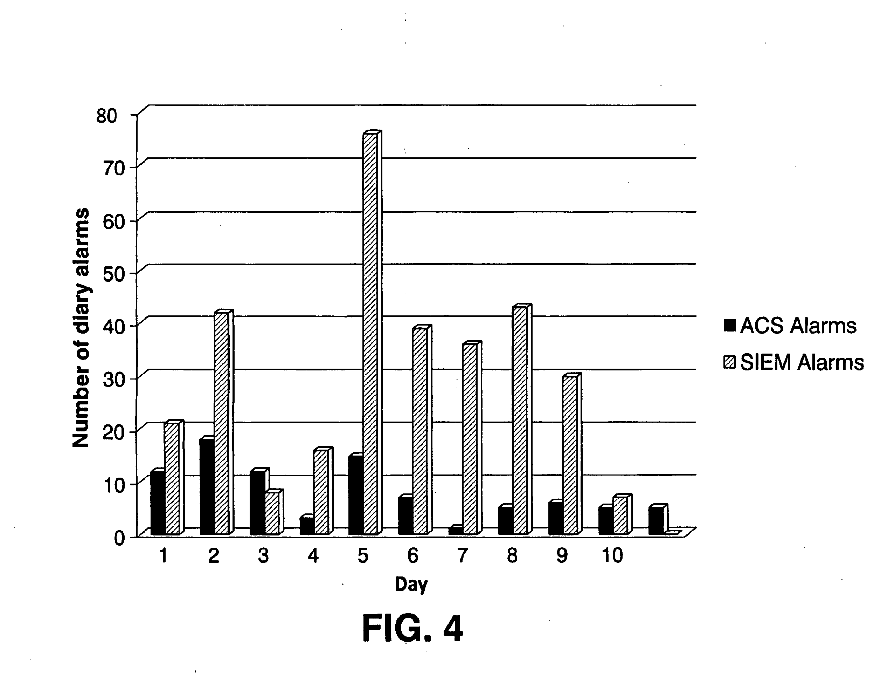

To show the benefits from the present invention, a real use case will be shown. On this use case we will show a comparison between a SIEM using its default set of correlations, with the present invention ACS. First thing we would like to highlight is that the number of alarms generated by ACS is smaller than the ones the stock SIEM generated. The figure 4 shows the number of total alarms generated by ACS and a stock SIEM, by days.

There can be observed two distinct periods on the figure:
- A first period, until the fifth day, that corresponds to the training/learning period for ACS, during which it was adjusted to the environment it was running on.
- A second period, from the fifth day till the end, that corresponds with the actual effective period for ACS, once it has incorporated on all the models the particularities of the environment it was running on.

On both periods, ACS generates fewer alarms than the stock SIEM, and it finally stabilizes around 5 daily alarms. Another important point to consider, associated to the system efficiency, is the total number of non relevant alarms generated. This data point is important because, from the point of view of a system operator, the less non relevant alarms a system generates, the less time and effort is wasted.

It is important also to define what we understand for relevant and non relevant alarms. We consider an alarm as relevant when it implies an actual problem, which will require operator or expert intervention, to solve the problem or at least to mitigate the risks produced by the problem. Thus, alarms that don't require any intervention, because they are of low severity, or informative, or they are just false positives, are tagged as non relevant. In the shown case, ACS generates a very small number of non relevant alarms (30 alarms, or a 9% of the total alarms generated), while the SIEM generated a much higher number (310 alarms, or 91% of the total alarms generated).

Another important point to evaluate is the capacity of the new system to detect new alarms that aren't generated by the used SIEM. In this working mode, ACS only generates alarms when it detects that SIEM hasn't generated it. To this respect, in the present case, ACS generates an 88% of the total relevant alarms, while the stock SIEM generates only 12%.

Summarizing, the advantages of the present invention compared with current SIEM, are:
- ACS is independent of the Intrusion Detection Systems (IDS) generated events. The dynamic tag system described is responsible for that independence, and lets the invention use the same configuration independently of the deployed IDS. An update on the detected events by the deployed IDS, or by any other device, does not require an ACS configuration update due to the definition of dynamic tag based on event description (common to all the manufactured devices) and not on the specific event generated by an specific device.
- SIEM systems' correlation modules are based on detecting known threats, which must be characterized and configured beforehand by an expert. This detection method forces a continuous revision of the configured correlations, to detect new threats that weren't included or configured initially. On the other hand, artificial intelligence algorithms used on the invention allow for the detection of new, previously unknown threats using as a based the initial configuration (knowledge). This learning behavior is intrinsic to the used algorithms.
- The invention can warn the system when the result is not reliable (detect when it is likely that a false positive or negative is generated).
- Training time of ACS, from its installation till the optimum working point is very low, and it also has a very low maintenance cost, since there's no need to define specific rules for each new threat.
- Adjustment for ACS consists basically on detecting and declaring the false positives (updating the knowledge databases of the AI engine with this information) so they won't appear again. If the training has been realized correctly, then false positive number will tend to zero rapidly

Hence, ACS main improvements over a standard SIEM are:
- **Higher efficiency,** since alarms generated by ACS can be catalogued as highest priority, and most of them require operator or security manager intervention.
- **Higher effectiveness,** since it detects a lot of alarms that aren't detected by a stock SIEM.
- **Lower costs,** both in start up and operation costs.

Although the present invention has been described with reference to specific embodiments, it should be understood by those skilled in the art that the foregoing and various other changes, omissions and additions in the form and detail thereof may be made therein without departing from the spirit and scope of the invention as defined by the following claims.

## Claims

1. A method of improving the detection of security threats in a communication network, the communication network including security devices which generate security events, those events being stored in a security database, the system comprising:
a) Defining different types of security events, each type of security event is called a dynamic tag, the dynamic tag assigned to each security event will depend on certain conditions met by the description of the event.
b) Defining the data models, a data model being the collection of dynamic tags which are related to a certain security threat; a data model will be defined for each type of security threat to be detected
c) On each configured execution interval, selecting the devices to be analyzed for each data model and, for each analyzed device, reading from the security database the events generated by said device, assigning a dynamic tag to each security event and calculating the value of each dynamic tag, the value of the tag is the number of occurrences for each analyzed device of the type of events correspondent to said tag
d) Clustering the tags, according to the data model definition, generating a pattern with the tag values for each data model and for each analyzed device
e) For each data model, reading the correspondent patterns generated in the step d) and applying a Artificial Intelligence algorithm based on the information stored in a knowledge database of said data model, in order to decide whether a suspicious activity alarm must be generated for each analyzed pattern or not; each knowledge database including, for each data model, a set of known patterns with the information whether an alarm must be generated for said pattern or not.

2. A method according to claim 1 where the Artificial Intelligence algorithm is a Neural Network algorithm

3. A method according to any of the previous claims, where the security devices which generate the security events may be routers, firewalls, web servers, Intrusion detection systems or Intrusion Prevention systems.

4. A method according to any of the previous claims where the step of defining the dynamic tags comprises the step of defining the keywords associated to each dynamic tag and the step of assigning a dynamic tag to a security event, comprises the step of analyzing the description of the security event and assigning a dynamic tag to the security event if the keywords associated to said dynamic tag are found on the description of the security event.

5. A method according to any of the previous claims where the step of defining the data models further includes:
- defining the list of the dynamic tags included in each data model
- defining the list of devices which must be analyzed for each data model

6. A method according to any of the previous claims where each device is identified by its IP address.

7. A method according to any of the previous claims where the suspicious activities alarm generated are sent to a Security Information Event Management, SIEM, system and the security database is part of this system and wherein the security events generated by the security devices are stored in the security database by the SIEM system.

8. A method according to any of the previous claims where, before the first execution interval starts, an initial set of known patterns with the information whether an alarm must be generated for said pattern or not, is stored in each knowledge data base and, in each execution interval, new patterns may be added to the knowledge databases with the information whether an alarm must be generated for said pattern or not, based on the analysis of real alarms.

9. A method according to claim 8 where if, as a result of analyzing a pattern, the algorithm takes the decision of generating an alarm, and this alarm is a false alarm, then the information of not generating an alarm for said pattern, is stored in the correspondent knowledge database.

10. A method according to claim 1, where the method, previous to step c), further includes a step of translating the format of the events stored in the security database to a requested common format.

11. A method according to any of the previous claims where the method is used to improve the correlation module of a Security Information Event Management, SIEM, system.

12. A system comprising means adapted to perform the method according to any preceding claim.

13. A computer program comprising computer program code means adapted to perform the method according to any claims from 1 to 11 when said program is run on a computer, a digital signal processor, a field-programmable gate array, an application-specific integrated circuit, a micro-processor, a micro-controller, or any other form of programmable hardware.

## Patentansprüche

1. Verfahren zur Verbesserung der Detektion von Sicherheitsbedrohungen in einem Kommunikationsnetzwerk, wobei das Kommunikationsnetzwerk Sicherheitsvorrichtungen enthält, welche Sicherheitsereignisse generieren, und diese Ereignisse in einer Sicherheits-Datenbank gespeichert werden, wobei das System aufweist:
a) Definieren verschiedener Typen von Sicherheitsereignissen, wobei jeder Typ von Sicherheitsereignis als ein dynamisches Tag bezeichnet wird, wobei das jedem Sicherheitsereignis zugewiesene dynamische Tag von der Erfüllung bestimmter Bedingungen durch die Beschreibung des Ereignisses abhängig ist,
b) Definieren der Daten-Modelle, wobei ein Daten-Modell die Sammlung dynamischer Tags ist, die auf eine bestimmte Sicherheitsbedrohung bezogen sind; wobei für jeden Typ einer zu detektierenden Sicherheitsbedrohung ein Daten-Modell definiert wird,
c) für jedes konfiguriertes Ausführungsintervall erfolgendes Wählen der Vorrichtungen, die für jedes Daten-Modell zu analysieren sind, und, für jede analysierte Vorrichtung, Lesen der von der Vorrichtung generierten Ereignisse aus der Sicherheits-Datenbank, Zuweisen eines dynamischen Tags zu jedem Sicherheitsereignis und Berechnen des Werts jedes dynamischen Tags, wobei der Wert des Tags die Häufigkeit des Auftretens des dem Tag entsprechenden Typs von Ereignissen für jede analysierte Vorrichtung ist,
d) Clustern der Tags gemäß der Daten-Modell-Definition, wobei ein Muster mit den Tag-Werten für jedes Daten-Modell und für jede analysierte Vorrichtung generiert wird,
e) für jedes Daten-Modell, Lesen der entsprechenden in Schritt d) generierten Muster und Anwenden eines Algorithmus für künstliche Intelligenz auf der Basis der in einer Wissensdatenbank des Daten-Modells gespeicherten Information, um zu entscheiden, ob ein zur Anzeige einer verdächtigen Aktivität vorgesehener Alarm für jedes analysierte Muster generiert werden muss oder nicht; wobei jede Wissensdatenbank für jedes Daten-Modell einen Satz bekannter Muster mit Information darüber enthält, ob ein Alarm für das Muster generiert werden muss oder nicht.

2. Verfahren nach Anspruch 1, bei dem der Algorithmus für künstliche Intelligenz ein Algorithmus für ein neuronales Netzwerk ist.

3. Verfahren nach einem der vorherigen Ansprüche, bei dem die Sicherheitsvorrichtungen, welche die Sicherheitsereignisse generieren, Router, Firewalls, Web-Server, Intrusionsdetektionssysteme oder Intrusionsverhinderungssysteme sind.

4. Verfahren nach einem der vorherigen Ansprüche, bei dem der Schritt des Definierens der dynamischen Tags den Schritt des Definierens der jedem dynamischen Tag zugeordneten Keywords umfasst, und der Schritt des Zuweisens eines dynamischen Tags zu einem Sicherheitsereignis den Schritt des Analysierens der Beschreibung des Sicherheitsereignisses und des Zuweisens eines dynamischen Tags zu dem Sicherheitsereignis für den Fall umfasst, dass die dem dynamischen Tag zugeordneten Keywords in der Beschreibung des Sicherheitsereignisses aufgefunden werden.

5. Verfahren nach einem der vorherigen Ansprüche, bei dem der Schritt des Definierens der Daten-Modelle ferner umfasst:
- Definieren der Liste der dynamischen Tags, die in jedem Daten-Modell enthalten sind,
- Definieren der Liste von Services, die für jedes Daten-Modell analysiert werden müssen.

6. Verfahren nach einem der vorherigen Ansprüche, bei dem jede Vorrichtung durch ihre IP-Adresse identifiziert wird.

7. Verfahren nach einem der vorherigen Ansprüche, bei dem die zur Anzeige einer verdächtigen Aktivität vorgesehenen Alarme, die generiert werden, an ein Security Information Event Management-, SIEM-, System gesendet werden und die Sicherheits-Datenbank ein Teil dieses Systems ist, und bei dem die von den Sicherheitsvorrichtungen generierten Sicherheitsereignisse durch das SIEM-System in der Sicherheits-Datenbank gespeichert werden.

8. Verfahren nach einem der vorherigen Ansprüche, bei dem, bevor das erste Ausführungs-Intervall beginnt, in jeder Wissensdatenbank ein Initial-Satz bekannter Muster gespeichert wird, der die Information enthält, ob für das Muster ein Alarm erzeugt werden muss oder nicht, und in jedem Ausführungs-Intervall den Wissensdatenbanken, welche die Information enthalten, ob für das Muster ein Alarm erzeugt werden muss oder nicht, neue Muster auf der Basis der Analyse der echten Alarme hinzugefügt werden können.

9. Verfahren nach Anspruch 8, bei dem, falls als Ergebnis des Analysierens eines Musters der Algorithmus die Entscheidung zum Erzeugen eines Alarms trifft und dieser Alarm ein falscher Alarm ist, dann in der entsprechenden Wissensdatenbank die Information gespeichert wird, für dieses Muster keinen Alarm zu erzeugen.

10. Verfahren nach Anspruch 1, wobei das Verfahren vor dem Schritt c) ferner einen Schritt enthält, in dem das Format der in der Sicherheits-Datenbank gespeicherten Ereignisse in ein gewünschtes übliches Format übersetzt wird.

11. Verfahren nach einem der vorherigen Ansprüche, wobei das Verfahren verwendet wird, um das Korrelationsmodul eines Security Information Event Management-, SIEM-, Systems zu verbessern.

12. System mit Vorrichtungen zum Durchführen des Verfahrens nach einem der vorherigen Ansprüche.

13. Computerprogramm mit einer Computerprogramm-Code-Vorrichtung, die zum Durchführen des Verfahrens nach einem der Ansprüche 1 bis 11 in der Lage ist, wenn das Programm an einem Computer betrieben wird, einem Digitalsignalprozessor, einem feldprogrammierbaren Gate-Array, einer anwendungsspezifischen integrierten Schaltung, einem Mikroprozessor, einer Mikrosteuervorrichtung oder einer anderen Form programmierbarer Hardware.

## Revendications

1. Procédé d'amélioration de la détection de menaces de sécurité dans un réseau de communication, le réseau de communication comprenant des dispositifs de sécurité qui génèrent des événements de sécurité, ces événements étant stockés dans une base de données de sécurité, le système comprenant:
a) définir des types différents d'événements de sécurité, chaque type d'événement de sécurité étant appelé une étiquette dynamique, l'étiquette dynamique affectée à chaque événement de sécurité dépendra de certaines conditions remplies par la description de l'événement
b) définir des modèles de données, un modèle de données étant la collection d'étiquettes dynamiques qui sont liées à une certaine menace de sécurité ; un modèle de données sera défini pour chaque type de menace de sécurité à détecter
c) sélectionner sur chaque intervalle d'exécution configuré, des dispositifs à analyser pour chaque modèle de données et, lire des événements générés par ledit dispositif pour chaque dispositif analysé, à partir de la base de données de sécurité, affecter une étiquette dynamique à chaque événement de sécurité et calculer la valeur de chaque étiquette dynamique, la valeur de l'étiquette étant le nombre d'occurrences pour chaque dispositif analysé du type d'événements correspondant à ladite étiquette
d) mettre en grappe les étiquettes, selon la définition du modèle de données, générer un motif avec les valeurs d'étiquette pour chaque modèle de données et pour chaque dispositif analysé
e) pour chaque modèle de données, lire les motifs correspondants générés à l'étape d) et appliquer un algorithme d'intelligence artificielle sur la base des informations stockées dans une base de données de connaissances dudit modèle de données, afin de décider si une alarme d'activité suspecte doit être générée pour chaque motif analysé ou non ; chaque base de données de connaissances comprenant, pour chaque modèle de données, un ensemble de motifs connus avec l'information de si une alarme doit être générée pour ledit motif ou non.

2. Procédé selon la revendication 1, où l'algorithme d'intelligence artificielle est un algorithme de réseau neuronal.

3. Procédé selon l'une quelconque des revendications précédentes, où les dispositifs de sécurité qui génèrent les événements de sécurité peuvent être des routeurs, des pare-feux, des serveurs Web, des systèmes de détection d'intrusion ou des systèmes de prévention d'intrusion.

4. Procédé selon l'une quelconque des revendications précédentes, où l'étape de définition des étiquettes dynamiques comprend l'étape consistant à définir les mots-clés associés à chaque étiquette dynamique et l'étape d'affectation d'une étiquette dynamique à un événement de sécurité, comprend l'étape consistant à analyser la description de l'événement de sécurité et à affecter une étiquette dynamique à l'événement de sécurité si les mots-clés associés à ladite étiquette dynamique sont trouvés sur la description de l'événement de sécurité.

5. Procédé selon l'une quelconque des revendications précédentes, où l'étape de définition des modèles de données comprend en outre :
- définir la liste des étiquettes dynamiques incluses dans chaque modèle de données
- définir la liste de dispositifs qui doivent être analysés pour chaque modèle de données.

6. Procédé selon l'une quelconque des revendications précédentes, où chaque dispositif est identifié par son adresse IP.

7. Procédé selon l'une quelconque des revendications précédentes, où les alarmes d'activités suspectes générées sont envoyées à un système de gestion d'événements d'informations de sécurité, SIEM, et la base de données de sécurité fait partie de ce système et dans lequel les événements de sécurité générés par les dispositifs de sécurité sont stockés dans la base de données de sécurité par le système SIEM.

8. Procédé selon l'une quelconque des revendications précédentes, où, avant que le premier intervalle d'exécution commence, un ensemble initial de motifs connus avec l'information de si une alarme doit être générée pour ledit motif ou non, est stocké dans chaque base de données de connaissances et, dans chaque intervalle d'exécution, de nouveaux motifs peuvent être ajoutés aux bases de données de connaissances avec l'information de si une alarme doit être générée pour ledit motif ou non, sur la base de l'analyse d'alarmes réelles.

9. Procédé selon la revendication 8, où si, à la suite de l'analyse d'un motif, l'algorithme prend la décision de générer une alarme, et que cette alarme est une fausse alarme, alors l'information de ne pas générer une alarme pour ledit motif, est stockée dans la base de données de connaissances correspondante.

10. Procédé selon la revendication 1, où le procédé, avant l'étape c), comprend en outre une étape consistant à traduire le format des événements stockés dans la base de données de sécurité en un format commun demandé.

11. Procédé selon l'une quelconque des revendications précédentes, où le procédé est utilisé pour améliorer le module de corrélation d'un système de gestion d'événements d'informations de sécurité, SIEM.

12. Système comprenant des moyens adaptés pour effectuer le procédé selon l'une quelconque des revendications précédentes.

13. Programme informatique comprenant des moyens de code de programme informatique adaptés pour effectuer le procédé selon l'une quelconque des revendications 1 à 11 lorsque ledit programme est exécuté sur un ordinateur, un processeur de signal numérique, un réseau de portes programmable par l'utilisateur, un circuit intégré à application spécifique, un microprocesseur, un microcontrôleur, ou toute autre forme de matériel programmable.
